Europäisches Patentamt

European Patent Office

Office européen des brevets

(19)

(11) Publication number: **0 081 968**
**A1**

# EUROPEAN PATENT APPLICATION

(21) Application number: **82306528.9**

(22) Date of filing: **08.12.82**

(51) Int. Cl.³: **F 16 F 15/30**

(30) Priority: **11.12.81 GB 8137529**

(43) Date of publication of application: **22.06.83**
**Bulletin 83/25**

(84) Designated Contracting States: **BE DE FR GB IT NL SE**

(71) Applicant: **The British Petroleum Company p.l.c.,**
**Britannic House Moor Lane, London EC2Y 9BU (GB)**

(72) Inventor: **Duff Barclay, Ian, The British Petroleum**
**Company p.l.c. Chertsey Road, Sunbury-on-Thames**
**Middlesex, TW 16 7LN (GB)**
Inventor: **Mayer, Rayner Michael, The British Petroleum**
**Company p.l.c. Chertsey Road, Sunbury-on-Thames**
**Middlesex, TW16 7LN (GB)**

(74) Representative: **Eastman, Hugh Leonard et al, BP**
**INTERNATIONAL LIMITED Patents and Licensing**
**Division Chertsey Road, Sunbury-on-Thames Middlesex**
**TW16 7LN (GB)**

(54) **Energy storage flywheels.**

(57) An energy storage flywheel comprises a hub (3) having a plurality of spokes (4) and a rim (1) mounted on the spokes (4). The rim (1) remains substantially circular and substantially concentric with the hub (3) at all times. The spokes (4) are geometrically elastically deformable such that a force applied to the outer surfaces of the spokes and acting towards the centre of the hub (3) elastically deforms the spokes (4) thereby reducing their radial length. The spokes (4) which suitably are hoop shaped have a radial length, when not deformed, which is greater than the inner radius of the rim (1). The rim, hub and spokes are preferably manufactured from fibre composite materials. The flywheel is suitable for storing kinetic energy in motor vehicles.

1

## ENERGY STORAGE FLYWHEELS

This invention relates to energy storage flywheels.

The ability of flywheels to accept and discharge energy over relatively short periods of time has been known for many years and energy storage flywheels have been used, or proposed for use, in a variety of applications. One application which has received increasing attention in recent years is the use of a flywheel as a means of storing kinetic energy in motor vehicles.

There is continuing research into ways of reducing the fuel consumption in all types of motor vehicles and in particular in vehicles operating on urban cycle duties such as, for example, buses, delivery vehicles, taxis and commuter trains. More than half of the fuel required by a bus operating on an urban route may be used during idling and accelerating the bus from rest and it has been estimated that about 80% of the inertia of a 16 tonne bus is dissipated as heat energy in the brake linings when the bus is brought to rest using the brakes. If the energy dissipated during braking could be stored in such a manner that it could be released, under controlled conditions, to remotivate the vehicle, a considerable saving in fuel could be achieved. A flywheel is particularly suitable for storing and releasing this energy.

The amount of energy stored in a flywheel is dependent upon the mass of the flywheel and its rotational speed. The maximum amount of energy which can be stored is limited by the materials of construction and the manner in which the stresses which are created are distributed within the flywheel. Metals, which have traditionally been used for the manufacture of flywheels, are not suitable for flywheels which are

1

required to store relatively large amounts of energy. This is because the high density of metals gives rise to high levels of stress which can exceed the tensile strength of the metal. Preferably the material of construction has a lower density than metal but is at least equally strong. Suitable materials are fibre composite materials.

It is known that mass located towards the outer radius of a flywheel contributes more to the energy storage than mass located towards the centre of the flywheel. Thus a suitable flywheel construction is known to be one comprising a hub having a plurality of spokes and a rim mounted on the spokes so that it is substantially concentric with the hub, the rim being preferably made of a filament material wound in a matrix material

The construction of such a flywheel from fibre composite materials presents certain difficulties. Energy storage flywheels, particularly those flywheels constructed of low density materials, are required to operate at very high rotational speeds in order to obtain high energy densities. The centrifugal forces acting on a flywheel rotating at high speed result in a certain amount of growth in the radial direction. This means that the forces, which increase with increasing radial distance from the centre of rotation, tend to cause the rim to separate from the spokes.

One method of overcoming this problem is disclosed in British Patent Number 1534 393 which relates to a flywheel having a multi-layered rim which rim has a non-circular configuration when the flywheel is at rest and has a substantially circular configuration when the flywheel is rotating at a predetermined speed. The flywheel comprises a spider having a hub and a plurality of spokes extending from the hub, each spoke having the same radial dimension to its outermost point, and a rim comprising a plurality of annular substantially concentric layers, the innermost layer having an average inner radius which is less than the radial dimension of the spokes. The rim is mounted on the spokes so that when the flywheel is at rest, the rim has a non-circular configuration. As the speed of the flywheel increases, the average radii of the layers of the rim increase and the rim becomes substantially circular, but remains in contact with the spokes.

2

0081968

The repeated flexing of the rim layers of a flywheel according to GB 1534 393 may lead to fatigue particularly at the positions on either side of points at which the rim is in contact with a spoke. The rim should preferably be circular at all speeds and not subjected to repeated distortions.

Thus, according to the present invention a flywheel comprising a hub having a plurality of spokes and a rim positioned on the spokes, is characterised in that the rim is substantially circular and concentric with the hub at all times and the spokes are shaped so that they are elastically deformable, such that a force applied to the outer surfaces of the spokes and acting towards the centre of the hub elastically deforms the spokes thereby reducing their radial length, the radial length of the undeformed spokes being greater than the radius of the inner surface of the rim.

Preferably the spokes are radially elastically deformable in the plane of rotation of the flywheel and in this plane, the spokes are preferably in the shape of continuous loops extending from the hub. Suitably, each loop comprises two elongate members attached at one end to the hub and extending divergently therefrom, the ends of the two members distant from the hub being joined by a third member to form a continuous loop. The loops may be substantially ovoid, oval or circular in shape.

The radial length of the spokes means in this specification the distance from the centre of the hub to the outermost point of the spokes.

Since the radial length of the undeformed spokes is greater than the radius of the inner surface of the rim, it is necessary to deform the spokes in order to reduce their radial length before the rim is positioned on the spokes. The invention includes a method of producing a flywheel which method comprises providing a substantially circular rim and a hub having a plurality of elastically deformable spokes, the radial length of the undeformed spokes being greater than the radius of the inner surface of the rim, applying a force to deform the spokes so as to reduce their radial length, positioning the rim on the deformed spokes and removing the applied force. The spokes are shaped so that they are elastically deformable and so they will tend to return to their undeformed shape when the applied force is removed. However, the rim prevents the spokes returning to their undeformed shape because its inner radius is less than the radial length of the undeformed spokes.

The present invention will be described with reference to the accompanying drawings Figures 1 to 4.

Figure 1 is an end elevation of a flywheel according to the present invention.

Figure 2 is a sectional view of the flywheel taken along the line II-II of Figure 1.

Figure 3 is a sectional side elevation of part of a flywheel, on a greater scale than Figures 1 and 2, showing a mechanical interlock between the spoke and the rim.

Figure 4 is an end elevation of a second embodiment of a flywheel according to the present invention.

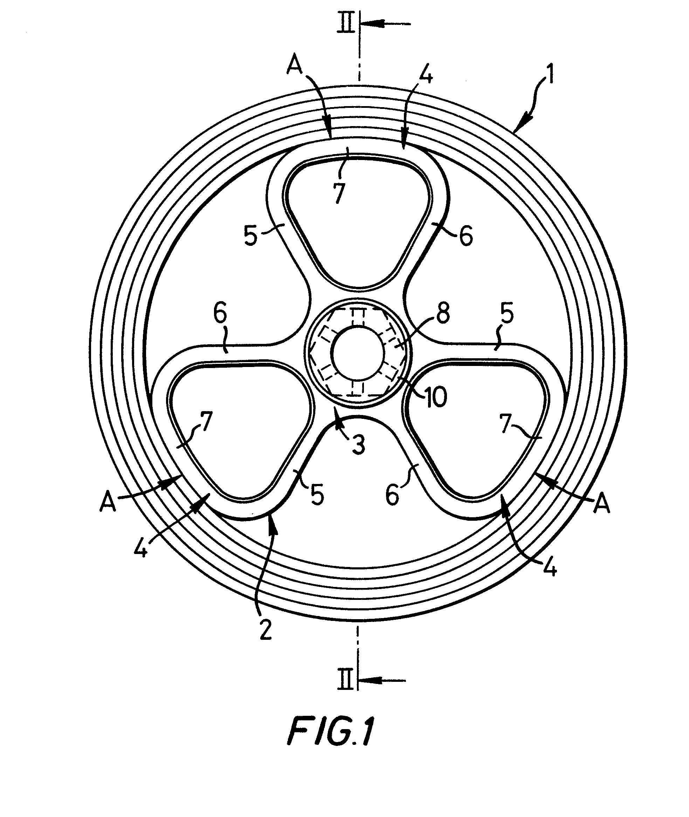

Figures 1 and 2 illustrate a flywheel according to the present invention comprising a rim 1 and a spider 2. The spider, comprises a hub 3 having three spokes 4. Each of the spokes 4, as shown in Figure 1, is in the form of a loop. Each spoke 4 comprises two elongate members, hereinafter referred to as arms, 5 and 6, attached at one end to the hub 3 and extending divergently therefrom, the ends of each pair of arms 5 and 6 distant from the hub 3 being joined by a third, curved section 7 to form a loop. The outer curve A of the curved section 7 is an arc of a circle having a centre midway between the two arms 5 and 6 and having a radius less than the inner radius of the rim 1.

Preferably each spoke 4 is symmetrical about a straight line passing through the centre of the hub 3 and the spokes 4 are equally distributed about the hub 3.

The hub 3, arms 5 and 6 and curved sections 7 are preferably integrally formed. The shape, dimensions and materials of construction are selected to give a spider having spokes 4 which are deformable so that their radial length may be varied between predetermined limits. A force applied to the outer surface A of the curved section 7, is transmitted to the arms 5 and 6 causing the arms to diverge thus reducing the radial length of the spokes 4. When the applied force is removed or reduced the arms converge and the radial length increases again.

The spider 2 is preferably manufactured from high strength fibres such as carbon fibres or glass fibres e.g. of the type known as E glass, the fibres being bonded in a matrix material such as epoxy resin or polyester resin. A suitable manufacturing method for spiders made from fibres and a matrix material is the resin injection moulding technique. The fibres are laid out in the mould and the mould closed. The matrix material is then injected into the mould in such a manner that it flows uniformly through the mould filling all of the voids, without substantially displacing the fibres. Injection is stopped when the mould is full. The matrix material is then allowed to cure.

Spiders 2 formed from composite material may be damaged if clamped directly between metal retaining means. The spiders may therefore have a component of another material, e.g. glass reinforced plastic or metal, moulded or otherwise fixed into the centre of the hub. An insert is shown in Figures 1 and 2 which comprises a tube 8 having flanges 9 and 10. The flywheel may be mounted on a shaft (not shown) passing through the bore of the tube 8 and held in position on the shaft by retaining means (not shown) which bear against the flanges 9 and 10. As well as, or instead of, clamping the insert between retaining means, the metal tube may have a tapered or splined bore which fits a correspondingly shaped surface on the shaft. Preferably the metal tube 8 has an outer surface which is of a non-circular cross section (e.g. hexagonal) or is otherwise keyed into the hub to prevent the metal insert separating from the composite material during use.

The actual dimensions of the arms 5 and 6 and the curved section 7 may be selected according to known engineering principles. The dimensions of the arms 5 and 6 are selected so that the arms can transmit the torque between the hub and the rim and can withstand the compressive force applied to the spokes by the rim but are capable of being elastically deformed. The curves of the curved section 7 are selected so that the outer curve A of each spoke 4 provides a good contact surface between the spoke and the rim 1 at all operating speeds and the curves between the curved section 7 and the arms 5 and 6 are selected so that a force applied to the outer curve A in the direction of the hub can be transmitted to the arms 5 and 6, causing them to diverge, without over-stressing or causing fatigue in any part of the structure. Preferably the arms and curved sections are of the same uniform thickness.

The radial length of the spokes 4, before deformation, is selected having regard to the materials of construction and the overall dimensions and operating conditions of the flywheel as a whole. The radius of the inner surface of the rim 1 of the flywheel increases as the rotational speed of the flywheel increases. The radial length of the spokes 4 will also tend to increase due to the centrifugal forces acting on the material of construction of the spider 2. However, the increase in the radial length of the spokes is restrained by the rim. The deformation of the spokes introduced on assembling the flywheel is such that a good contact is maintained between the spokes and the rim without unduly stressing the spokes or the rim. By deforming the spokes on assembly, the spokes are prestressed. As the radius of the rim increases, the stresses arising in the spokes due to the centrifugal forces are opposed by the stresses introduced into the spokes during assembly. The net stresses in the spokes are therefore less than they would have been if the spokes had not been prestressed. The dimensions of the spider are therefore selected so that when the flywheel is rotating at its maximum operating speed the radial length of the spokes 4 is at least equal to the radius of the inner surface of the rim 1.

The rim is substantially circular in cross-section and preferably comprises a plurality of layers. However a rim having a single layer may in some cases be used. The rim 1 shown in Figures 1 and 2 has five layers 11 to 15. The rim 1 is preferably constructed from fibres wound circumferentially and bonded in a suitable matrix material. Suitable materials include carbon, aramid and glass fibres in epoxy resin, or polyester resin. Preferably the inner layers of a multilayer rim are less stiff than the outer layers so that the radii of the inner layers will tend to increase more than the radii of the outer layers when the flywheel is rotating at a high speed. Thus, the inner layers will induce a compressive loading on the other layers which will keep the layers in contact at high rotational speeds.

The rim is manufactured with the radius of the inner surface of the rim 1 smaller than the undeformed radial length of the spokes 4. In order to fit the rim onto the spokes, the radial length of each spoke must be reduced. This may be done, for example, by applying a force to the outer surface A of each spoke 4. The arms are forced to diverge which increases the radius of the curved section 7 and decreases the radial length of the spoke. The arms 5 and 6 may then be wedged so as to prevent the arms converging again when the force applied to the curved section 7 is removed. Alternatively, hydraulic cylinders placed between the arms 5 and 6 may be used to force the arms to diverge thereby decreasing the radial length of each spoke 4. Preferably each spoke is deformed by the same amount during the fitting of the rim. When the spokes have been deformed sufficiently the rim may be placed over the spokes. By removing the wedges or releasing the hydraulic cylinders, the arms converge and the curved section 7 is urged against the inner surface of the rim 1. The rim prevents the deformed spokes returning to their undeformed radial length. The force applied by the deformed spokes is sufficient to provide a good contact area between the spokes 4 and the rim 1 but is not great enough to substantially deform the rim 1 which therefore remains substantially circular. Thus, the spokes are preferably less stiff in the radial direction than the rim. Preferably the radial stiffness of the rim is at least twice the stiffness of the spokes and may be more than ten times the stiffness of the spokes. Typically, the radial length of the undeformed spokes is from 0.3 to 4% greater than the internal radius of the rim and so the spokes are deformed such that their radial length is reduced by this amount.

When the flywheel is rotated at increasing speed, the whole flywheel expands radially and the rim 1 expands circumferentially.

Thus the radius of each layer of the rim increases. As the inner radius of the innermost layer 15 increases, the radial length of the spokes increases due to the centrifugal forces acting on the material of construction of the spider 2. This increase in the radial length of the spokes together with the deformation of the spokes continues to urge the curved section of the spokes against the inner surface of the rim. Thus the rim 1 and spokes 4 remain in contact as the speed of the flywheel increases.

Since the spokes are preferably less stiff than the rim, the forces acting on the spokes to urge them against the inner surface of the rim are not sufficient to substantially deform the rim which therefore remains substantially circular.

In order to provide a safety margin the undeformed radial length of the spokes 4 may be greater than the radius of the inner surface of the innermost layer 15 when the flywheel is operating at its maximum operating speed. Suitably, the spider is designed so that the undeformed radial length of the spokes 4 is greater than the radius of the inner surface of the innermost layer of the flywheel when the flywheel is rotating at a speed exceeding 150% of the maximum designed operating speed of the flywheel.

The spider 2 of a flywheel according to the present invention is not attached to the rim 1 by means of a mechanical fastener because such means of attachment may result in undesirable stress concentrations or a significant decrease in the performance of the flywheel. The spokes 4 remain in contact with the rim 1 by virtue of the deformation of the spokes which urges the curved sections 7 against the inner surface of the rim 1 and by the relative radial expansions of the rim and spokes. However, a force, other than a force acting in a radial direction, which is applied to a flywheel of the type shown · in Figures 1 and 2, may cause the spider 2 to slip on the inner surface of the rim. Displacement of the spider with respect to the rim could cause the flywheel to become unbalanced.

Preferably therefore a mechanical interlock is provided between the rim 1 and the spokes 4 of the spider 2. The mechanical interlock should restrict axial movement of the spokes with respect to the rim and keep the spider 2 and rim 1 in the same plane whilst not interfering with the radial movement of the rim and spokes.

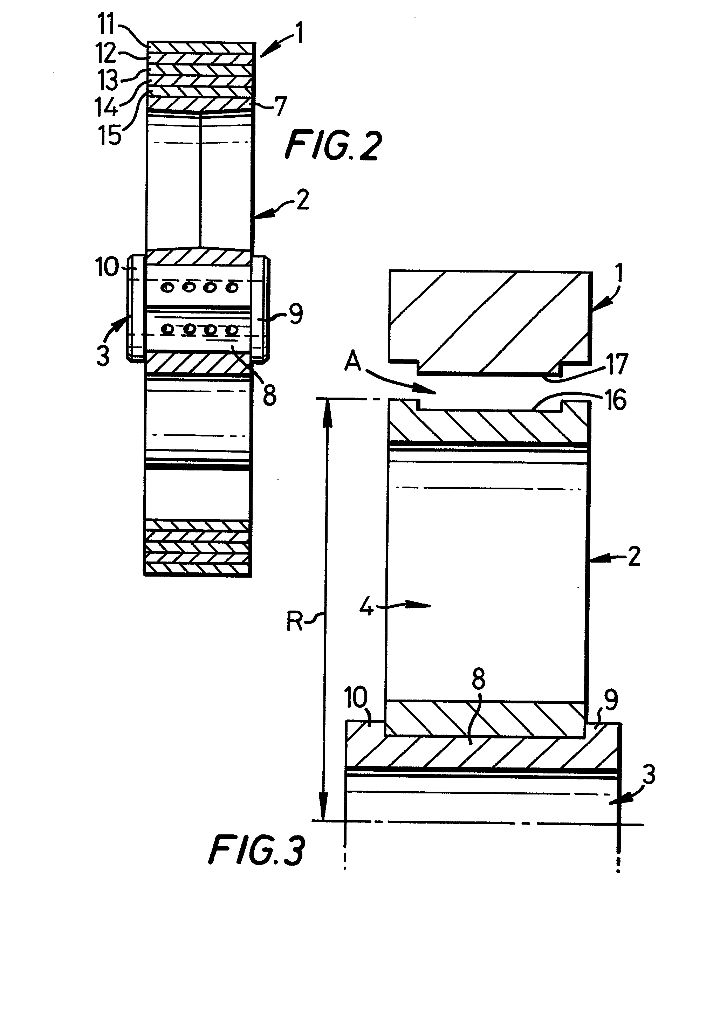

A suitable mechanical interlock is illustrated in Figure 3 which is an exploded sectional side elevation of part of a flywheel according to the present invention showing one spoke 4 and part of the rim 1. The rim is shown as a single layer. The outer surface A of the curved section 7 has a recess 16 into which fits a projection 17 on the inner surface of the rim 1. The projection 17 may extend around the whole circumference of the rim. The recess 16, however, is only required on the outer surface of the curved section 7 of each spoke. Since the rim 1 and spokes 4 are preferably of composite material, then the recess 16 and projection 17 are preferably formed during the manufacture of the rim and spider rather than being cut out of the produced articles. This is because cutting the composite material may have an adverse and unpredictable effect on the properties of the article.

The mechanical interlock is preferably small so that it does not hinder the assembly of the rim on the spokes. Thus, the depth of the recess may suitably be from 0.2 to 1.5% of the radial length R of the undeformed spoke 4, more preferably from 0.3 to 1.0%.

Preferably the contact area between the spoke 4 and the rim 1 is as large as possible. Therefore, the axial length of the recess is a large proportion (e.g. greater than 70%) of the total axial length of the spoke 4. Preferably the recess is from 80 to 90% of the total axial length of the spoke 4. The axial length of the projection 17 is only slightly less than the axial length of the recess so that the projection 17 is a close fit in the recess 16. The height of the projection 17 is slightly larger than the depth of the recess so as to ensure that the rim is supported on the large surface of the projection.

Alternative mechanical interlocks could also be used. For example, if in another embodiment, the rim of the flywheel had a smaller axial length than the spokes, the rim could be accommodated in a recess in the spokes without the need for a corresponding projection on the rim. In a further embodiment, the recess could be in the rim and the projection on the spokes.

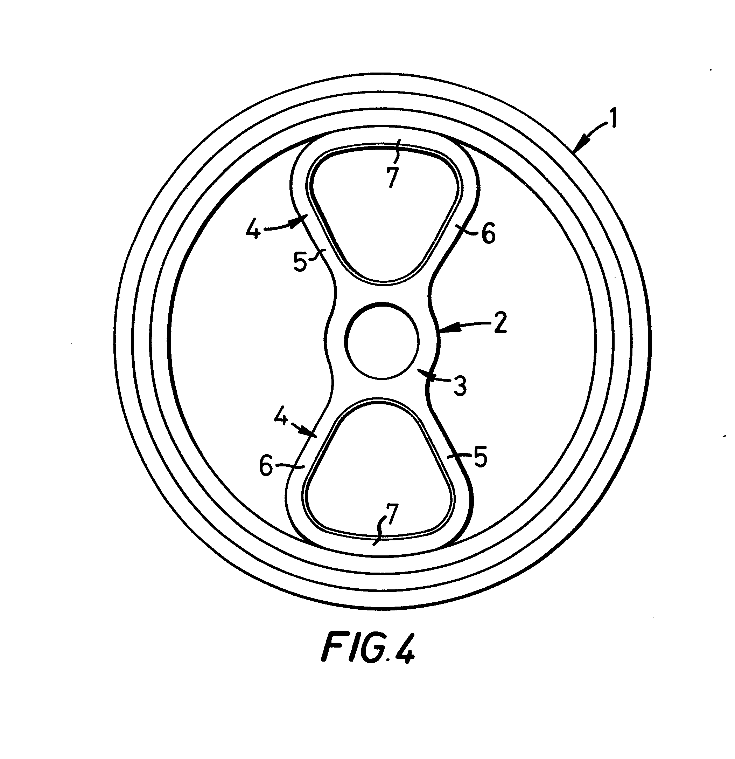

Figure 4 shows a second embodiment of the invention in which the spider 2 comprises a hub 3 having two spokes 4. The maximum number of spokes 4 which the hub 3 may have is determined by the amount of deformation required; there must be sufficient distance between the spokes to accommodate the deformation. Preferably, the same amount of deformation is applied to each spoke at any particular moment.

The invention is illustrated with reference to the following example.

Example

A flywheel according to the present invention was constructed from a cylindrical rim and a hub having three deformable spokes.

The rim had the following overall dimensions;

|                  |          |
|------------------|----------|
| Outside diameter | 150.0 mm |
| Inside diameter  | 120.0 mm |
| Axial length     | 30.0 mm  |

The rim comprised three concentric layers and was manufactured by the filament winding technique which is well known in the art of composite materials. The dimensions and properties of the layers were as follows;

| Layer | I.D. (mm) | O.D. (mm) | Filament Material | Volume % of filament | Modulus of Elasticity of the fibres (GPa) |
|-------|-----------|-----------|-------------------|----------------------|-------------------------------------------|
| 1     | 120       | 132       | E glass           | 55                   | 75                                        |
| 2     | 132       | 146       | Aramid            | 50                   | 125                                       |
| 3     | 146       | 150       | Aramid            | 50                   | 125                                       |

The matrix material was an epoxy resin supplied by Ciba Geigy. The resin comprised an unmodified Bisphenol A resin sold as MY 750 and a diaminodiphenylmethane sold as HT 972.

The radial expansion of the rim due to centrifugal forces at 60 000 rpm was expected to be of the order of 0.4 mm.

The spider comprising the hub having three spokes, was of the shape shown in Figures 1 and 2 and had the following major dimensions:-

| | |
|---|---|
| Radial length of undeformed spokes | 60.4 mm |
| Axial length | 30.0 mm |
| Thickness of arms and curved section of the spokes | 5.0 mm |

An aluminium insert comprising a tube having a flange at each end was moulded into the hub. The insert had a hexagonal outer surface and was generally shaped as shown in Figures 1 and 2.

The spider was manufactured by the resin injection moulding method. Glass fibre tapes were laid out in a mould in such a manner that continuous lengths of the tape were wound around the central hub and then around the loop of each of the spokes. The mould was closed and a curable resin injected into the mould. The resin used was an isophthallic type of polyester resin supplied by BP Chemicals Limited under the trade name Cellobond 283/270. The curing agent was benzyl peroxide ex Akzo Chemie and an accelerator, dimethyl-para-toludine, also ex Akzo Chemie was used.

As indicated in the dimensions given above for the spider and rim, the radial length of the undeformed spokes was 0.4 mm larger than the inner radius of the rim. The flywheel was designed to operate at a maximum speed of 60,000 rpm. Thus the undeformed radial length of the spokes is equal to the expected inner radius of the flywheel when it is rotating at its designed maximum speed.

The spider was mounted on a shaft passing through the centre of the hub and a known force applied to the outer surface of a spoke, acting radially towards the centre of the shaft. By measuring the amount by which the spoke deformed, the radial stiffness of the spoke was found to be 3.6 MN/m. The radial stiffness of the rim was 51 MN/m. Thus the rim was much stiffer than the spokes in the radial direction.

The deformation of the spokes was tested by repeatedly applying a force to the outside of a spoke so as to reduce the radial length of the spoke by 0.4 mm and then removing the force to allow the spoke to return to its undeformed radial length. The spokes showed no reduction in radial stiffnes and no other signs of damage after the spokes had been deflected more than a million times.

The rim was positioned on the spokes by applying a force to the arms of each spoke to force them to diverge thereby reducing the radial length of each spoke. When the spokes had been deformed such that their radial length was reduced by more than 0.4 mm, the rim was positioned over the spokes and the force removed.

The assembled flywheel was successfully spun at a speed of 25 000 rpm

## Claims

1. A flywheel comprising a hub having a plurality of spokes and a rim positioned on the spokes is characterised in that the rim is substantially circular and substantially concentric with the hub at all times, and the spokes are shaped so that they are elastically deformable, such that a force applied to the outer surfaces of the spokes and acting towards the centre of the hub elastically deforms the spokes thereby reducing their radial length, the radial length of the undeformed spokes being greater than the inner radius of the rim.

2. A flywheel as claimed in claim 1 characterised in that the spokes are radially deformable in the plane of rotation of the flywheel.

3. A flywheel as claimed in either of claims 1 or 2 characterised in that the spokes are in the shape of continuous loops extending from the hub.

4. A flywheel as claimed in claim 3 characterised in that each spoke comprises two elongate members attached at one end to the hub and extending divergently therefrom, the ends of the two elongate members distant from the hub being connected by a third member to form a continuous loop.

5. A flywheel as claimed in claim 4 characterised in that the outer surface of the third member is curved and is an arc of a circle the centre of which is midway between the two elongate members and the radius of which is less than the radius of the inner surface of the rim.

6. A flywheel as claimed in any of claims 1 to 5 characterised in that the spokes and the hub are integrally formed.

7. A flywheel as claimed in any of claims 1 to 6 characterised in that the radial length of the undeformed spokes is from 0.3 to 4% greater than the internal radius of the rim.

8. A flywheel as claimed in any of claims 1 to 7 characterised in that the radial stiffness of the rim is at least twice the radial stiffness of the spokes.

9. A flywheel as claimed in claim 8 characterised in that the radial stiffness of the rim is at least 10 times the radial stiffness of the spokes.

10. A flywheel as claimed in any of the claims 1 to 9 characterised in that a mechanical interlock is provided between the rim and the spokes to restrict axial movement of the spokes with respect to the rim.

11. A flywheel as claimed in claim 10 characterised in that the mechanical interlock comprises a recess on the outer surface of the spokes and a projection on the rim which fits into the recess.

12. A flywheel as claimed in claim 11 characterised in that the depth of the recess is from 0.2 to 1.5% of the radial length of the undeformed spoke.

13. A flywheel as claimed in either of claims 11 or 12 characterised in that the total axial length of the recess is from 80 to 90% of the axial length of the spoke.

14. A method of producing a flywheel comprising providing a substantially circular rim and a hub having a plurality of elastically deformable spokes, the radial length of the spokes being greater than the radius of the inner surface of the rim, applying a force to deform the spokes so as to reduce their radial length, positioning the rim on the deformed spokes and removing the applied force.

*FIG.1*

FIG.2

FIG.3

FIG.4

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 F   15/30 |
| D | FR-A-2 292 898  (GARRETT) *Claims; figures 1,5* | 1 | |
| | --- | | |
| A | US-A-4 176 563  (YOUNGER) *The whole document* | 1 | |
| | --- | | |
| A | FR-A-2 265 004  (JOHN HOPKINS) *The whole document* | 1 | |
| | ----- | | |

TECHNICAL FIELDS
SEARCHED (Int. Cl. 3)

F 16 F
F 16 C
F 16 H
F 03 G
B 60 K

The present search report has been drawn up for all claims

| Place of search THE HAGUE | Date of completion of the search 03-03-1983 | Examiner PIRIOU J.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82